# EUROPEAN PATENT SPECIFICATION

(11) **EP 1 116 350 B1**
(45) Date of publication and mention of the grant of the patent: **05.04.2006**
(21) Application number: 99943825.2
(22) Date of filing: 24.08.1999
(51) Int. Cl.: H04H 9/00, G01V 3/00, G01V 1/00, E21B 33/00, E21B 33/03, E21B 33/04, E21B 33/047, E21B 34/16, E21B 43/10, E21B 7/04, E21B 7/24, H01R 4/60, H01R 4/64

(54) **DRILL STRING TELEMETRY WITH INSULATOR BETWEEN RECEIVER AND TRANSMITTER**
MESSSIGNALÜBERTRAGUNG FÜR BOHRGESTÄNGE MIT EINEM ISOLATOR ZWISCHEN DEM EMPFÄNGER UND DEM SENDER
APPAREIL DE TELEMETRIE DESTINE A UN TRAIN DE TIGES ET PRESENTANT UN ISOLANT ENTRE LE RECEPTEUR ET L'EMETTEUR

(30) Priority: 26.08.1998 GB 9818418
(43) Date of publication of application: 18.07.2001
(73) Proprietor: WEATHERFORD/LAMB, INC., Houston Texas 77027 (US); Target Well Control Limited, Aberdeen AB12 4YA (GB)
(72) Inventor: MCCLURE, Paul, A., Cults, Aberdeen AB15 9HP (GB)
(74) Representative: Harding, Richard Patrick
(86) International application number: PCT/US1999/019125
(87) International publication number: WO 2000/013349

(56) References cited:
- WO-A-98/06924
- US-A- 2 364 957
- US-A- 2 940 787
- US-A- 4 174 577
- US-A- 4 387 372
- US-A- 4 557 538
- US-A- 4 584 675
- US-A- 4 674 773
- US-A- 4 739 325
- US-A- 4 839 644
- US-A- 5 339 036
- US-A- 5 359 324
- US-A- 5 394 141

## Description

This present invention relates to an improved downhole telemetry apparatus and methods of its use. The downhole telemetry apparatus preferably utilizes electromagnetic (current potential and magnetic) signals to transmit data from an oil or gas well during drilling or alternately while producing. The present invention is particularly useful for telemetering data concerning formation characteristics, wellbore characteristics and physical characteristics within the drillstring at the drill bit.

Conventional techniques of well data telemetry involve mud pulse telemetry. In this technique, data pulses are typically transmitted through the drilling mud which is pumped down a borehole being drilled. Other types of well data telemetry techniques utilize electromagnetic signals. These techniques typically measure magnetic flux signals transmitted electronically through a drill string material or through the formation from a transmitter coil at one end of the drill string to a receiver coil at the other end.

WO 98/06924 discloses a system of telemetry in which an electrically insulating joint is provided between two parts of a drillstring, and a voltage applied across the joint.

In accordance with one aspect of the present invention there is provided downhole telemetry apparatus comprising:
an upper sub and a lower sub each having an interior bore;
an electrically insulating joint connecting the upper sub and lower sub, the electrically insulating joint comprising an electrically insulating material interposed between at least a portion of the upper sub and the lower sub; and
an electrode disposed along the length of the respective interior bores of the upper sub and the lower sub and extending across the electrically insulating joint, wherein the upper sub and the lower sub each make at least one electrical contact with the electrode;
characterised in that the electrode comprises an insulating pressure housing connected to a tube made of a conductive material.

Further aspects and preferred features are set out in claim 2 *et seq*.

Thus a well data telemetry apparatus is provided. The apparatus is preferably utilized to gather data from an oil or gas well. The apparatus may comprise a signal generator capable of generating a signal at a first location of a well, a receiver capable of detecting the signal at a position spaced from the generator, and an electrical insulator disposed between at least a portion of the generator and the receiver.

The generator may generally be any suitable current supply such as a downhole battery or turbine alternator, both of which can drive an AC generator. The generator is typically connected across the electrical insulator. The generator is preferably located in a drill or a work string operating in the wellbore, even more preferably at the lower end of the drill or work string, and most preferably at the bottom hole assembly (BHA) of the drill string. Alternatively, the generator may be disposed at the upper end of the drill or work string, or at the wellhead or surface.

The receiver may generally be any device suitable for detecting an electric potential or magnetic signal that comprises the signal generated. For example, in the case of the magnetic signal the receiver may be an AC magnetometer capable of detecting and responding to a signal transmitted by a transmitter. Alternatively, the receiver may be a conventional receiver coil. In the case of the electric potential measurement electrodes disposed at the surface constructed of copper rods or plates in a copper sulfate solution are used. The receiver is preferably located at the wellhead or surface.

The apparatus may further comprise sensors for detecting and measuring parameters or conditions at or near the location of the signal generator. (e.g. at the bottom of the wellbore). Examples of sensors that may be particularly useful with the present invention include inclinometers, magnetometers, scintillating sensors, resistivity sensors, gradiometers, and strain gauges.

The receiver and generator may each comprise a power source. Suitable power sources may include a battery or turbine generator.

The receiver and generator may further comprise recording, processing and display apparatus as needed or desired.

The electrical insulator preferably forms a connectable joint between an upper and a lower sub of a drill string. The term "sub" as used herein, in accordance with its common usage by those of ordinary skill in the art, refers to a segment of a drill string or tool. In a preferred embodiment of the invention, the electrical insulator forms a connectable joint comprising a pin and box connection between the ends of an upper and a lower sub. The connectable joint is preferably a threaded joint having a male threaded portion and a female threaded portion.

The electrical insulator typically comprises a suitable electrically insulating material. The electrically insulating material is preferably a polymer, such as rubber nitrile, or fiberglass. One of ordinary skill in the art is aware of the broad array of electrically insulating materials that may be suitable for use in the present invention.

The underlying connectable joint is preferably stainless steel, but other metals or materials may also be used. The electrically insulating material is typically wrapped, sprayed, molded, or otherwise applied to at least one end of the connectable joint. With a threadable joint, the electrically insulating material may be wrapped, sprayed, molded, or otherwise applied around the threads of at least one, and perhaps both, of the male or female connectors before assembling the upper and lower subs.

At least one of the ends of the upper or lower sub forming the connectable joint is preferably coated with rubber nitrile. The rubber nitrile is preferably coated onto the pin portion of the connection, or wrapped, formed or shrunk onto either (or both) parts of the connector. Optionally, the connectable joint may comprise a threaded male/female connection having more or less helical threads. The rubber nitrile may be wrapped or formed onto the threads, and can thereby insulate electrically the box and the pin sections of the connector when the connectable joint is formed. In a preferred embodiment, nitrile rubber (or a similar electrically insulating material) is coated onto each of the helically threaded portions of the pin and box parts. In addition to the insulating function the rubber nitrile serves to provide shock isolation between the two segments of the drillstring it connects.

The present invention also provides a method of using a down hole telemetry apparatus to identify characteristics of the underground environment and formations.

A voltage is preferably applied across the insulator, disposed between an upper and lower sub of a drill string, whereby an electrical circuit is completed between the generator and the receiver. Preferably, both the generator and receiver form part of the drill or work string and the circuit is completed between the drill string (separated by the insulator) and the formation.

When the current flows through the apparatus, it generates magnetic fields and an electric potential in the drill string and surrounding formation which can be received, recorded and analyzed by apparatus at the surface or at an alternate point along the drillstring. The magnetic field or the current signal generated and propagated to the surface can be interpreted as an indication of downhole conditions, such as resistivity of the formation oil water contact points, etc. In addition, downhole sensors may feed signals to the generator and cause modulation of certain characteristics of the wave so as to encode the signal from the sensor in the signal (e.g. the electromagnetic wave) from the generator.

The present invention also provides a method of transferring data in a wellbore, the method comprising generating a signal at a first point in the well, providing a receiver at a second point spaced from the first, providing an electrical insulator between at least a portion of the generator and the receiver and transmitting data from the generator to the receiver.

Preferably, current is transmitted along the string by a voltage source applied across the insulator and connections between each end of the string and the formation are made to use the formation as a return path for the current.

### BRIEF DESCRIPTION OF THE DRAWINGS

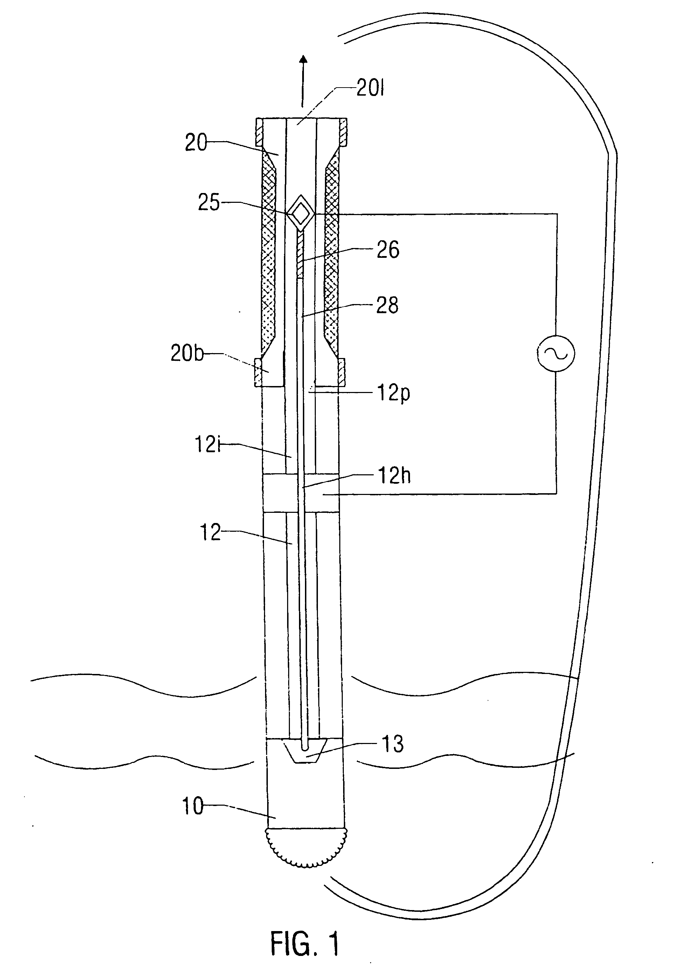

Fig. 1 shows a well data telemetry apparatus incorporating an electrical insulator.

### DESCRIPTION OF ILLUSTRATIVE EMBODIMENTS

The present invention will now be described, by way of example only, with reference to the accompanying drawing.

Referring now to Fig. 1, a drill string comprises a bit 10 attached to a lower sub 12 with a conventional externally threaded male connector pin 12p at the upper end thereof. An upper sub 20 is provided with a female box connector 20b at its lower end which is internally threaded to receive the threads of pin 12p so as to engage top sub 20 and lower sub 12 together. The subs 12, 20 each have a central bore 12i, 20i.

Pin 12p has a coating of rubber nitrile or fiberglass on its outer threads, and the contours of the threads are preserved through the outer face of the rubber nitryl or fiberglass coating so that the internal thread of box section 20b actually contacts the fiberglass or rubber nitrile coating on the outer threads of the pin 12p. Both the upper sub 20 and the lower sub 12 have bodies constructed from steel, but the coating disposed on the outer threads of pin 12p prevents electrical contact between the two subs 20, 12 at the interface.

Upper sub 20 has an outer epoxy fiberglass insulator surrounding a waist in its body, and has aluminum oxide coatings on the exterior surfaces of its upper and lower end.

A contact electrode 25 is located against the inner surface of the bore 20i of the upper sub, and from the contact electrode 25, an insulating pressure housing of non-electrically conductive material extends downwardly along the central axis of the bore 20i. The insulating pressure housing 26 is connected to a narrow tube 28 of beryllium copper which extends axially downwards along the central bore of the two subs 20, 12. A hanger 12h extends through the wall of the lower sub 12 into the bore 12i so as to engage the beryllium copper tube 28. The hanger 12h is typically formed from an electrically conductive material such as stainless steel so that electrical contact is made between the hanger 12h and the tube 28. The tube 28 extends through the hanger 12h downwardly through the bore 12i of the lower sub 12 and terminates in a space 13 adjacent the bottom hole assembly and drill bit 10 without touching or otherwise making electrical contact with the lower sub 12.

A voltage generator such as a battery or an AC current source is applied between the hanger 12 and the contact electrode 25, optionally from a downhole source, but preferably from a surface AC source so that current is driven upwardly from the contact electrode 25, to the upper sub 20 and continuing up the remainder of the drill string to the surface. From the surface, the current returns to the drill bit 10 via the formation and continues up the lower sub 12 to the hanger 12h. The voltage across the insulator can be modulated so as to generate a carrier wave that can carry the signals from the downhole sensors to the receiver at the surface.

Mud can be pumped down the bore 20i, 12i of the subs 20 and 12 in a conventional manner. The mud flows around contact electrode 25 and tube 28, but does not allow electrical conductivity between the two to any substantial extent.

When the current flows through the apparatus, it generates magnetic fields and electric potentials in the drill string and surrounding formation which can be received, recorded and analyzed by apparatus at the surface. The magnetic field or the current signal generated and propagated to the surface can be interpreted as an indication of downhole conditions.

In the apparatus described, AC current is applied by the voltage across the insulating connection, at a typical frequency of 5Hz. The carrier frequency can be varied up and down. For example if the wellbore is shallow, higher frequencies can be accommodated, or if deeper, the frequency may be reduced to reduce attenuation.

A numerically controlled oscillator (NCO) device such as the Analog Devices part 7008 is used to generate a stable reference frequency. Once the carrier wave is generated, the data to be transmitted by must be encoded. This can be by amplitude modulation of the voltage, or (better) frequency modulation, which is less prone to noise aberrations. Significant improvements can be gained by using phase modulation, where the phase of the carrier system is changed in accordance with the modulating signal. Noise emulation of phase shifts are difficult, and this variant is less prone to noise. The preferred system uses an M-ary communication modulation system as described in "Principles of communications, systems, modulation and noise" by RE Zimmer and WH Tranter. This provides the advantage high rates of coding, and a high effective data rate within a relatively narrow bandwidth.

Downhole sensors such as inclinometers or radiation sensors can provide local signals or via short hop telemetry can feed signals to the generator comprising the current source connected across the insulator. The generator can be configured with electronics capable of encoding the signal from the sensor by modulating certain characteristics of the voltage applied across the insulator. The characteristics of the modulated signal from the generator then carries the encoded signal from the downhole sensor to the surface receiver.

The invention has advantageous characteristics in that coating of an insulating material (e.g. rubber nitrile) over the pin and/or box of a connectable joint allows the construction of electrical insulators which are capable of withstanding torque and axial loads which are common in a drill string. Certain embodiments of the invention allow the transmission of data through the drill string as an electrical conduit during drilling operations.

Advantages are gained by a very coarse thread being provided on the pin and box. The threads are advantageously helical.

The topside receiver can be any suitable type capable of detecting changes in magnetic field. Typically one or more magnetic field sensors such as gradiometers which are conventionally available, for example, from IMC Limited of Salford, England and described in the paper "Three Component Magnetic Measurement Using the Cubic Anisotropy in [111] YIG Films" by A Y Perlov et al. Simpler forms of receivers can be used (e.g. simple ground-engaging electrodes).

Those of skill in the art should, in light of the present disclosure, appreciate that many changes can be made in the specific embodiments which are disclosed and still obtain a like or similar result without departing from scope of the invention as defined by the following claims.

## Claims

1. A downhole telemetry apparatus comprising:
an upper sub (20) and a lower sub (12) each having an interior bore (20i, 12i);
an electrically insulating joint (20b, 12p) connecting the upper sub and lower sub, the electrically insulating joint comprising an electrically insulating material interposed between at least a portion of the upper sub and the lower sub; and
an electrode (28) disposed along the length of the respective interior bores of the upper sub and the lower sub and extending across the electrically insulating joint, wherein the upper sub and the lower sub each make at least one electrical contact with the electrode;
**characterised in that** the electrode comprises an insulating pressure housing (26) connected to a tube made of a conductive material.

2. An apparatus as claimed in claim 1, wherein the upper (20) and the lower (12) sub are operably connected to a drill string having a proximate end and a distal end, the distal end comprising a bottom hole assembly.

3. An apparatus as claimed in claim 2, further comprising a generator operably connected to the drill string and forming an electrical circuit across the insulating joint between the upper (20) and the lower (12) sub.

4. An apparatus as claimed in claim 3, wherein the generator is disposed at the bottom hole assembly.

5. An apparatus as claimed in claim 3 or 4, wherein the generator is an AC generator.

6. An apparatus as claimed in claim 3, 4 or 5, wherein the generator comprises a power source.

7. An apparatus as claimed in any of claims 2 to 6, further comprising a receiver operably connected to the drill string.

8. An apparatus as claimed in claim 7, wherein the receiver is operably connected at the proximal end of the drill string.

9. An apparatus as claimed in claim 7 or 8, wherein the receiver comprises a power source.

10. An apparatus as claimed in any preceding claim, wherein the electrically insulating joint comprises a pin (12p) and box (20b) connection between the upper and lower sub.

11. An apparatus as claimed in any preceding claim, wherein the electrically insulating joint is a threaded joint.

12. An apparatus as claimed in any preceding claim, wherein the electrically insulating material comprises an electrically insulating polymer.

13. An apparatus as claimed in any of claims 1 to 11, wherein the electrically insulating material is rubber, fibreglass, or ceramic.

14. An apparatus as claimed in any preceding claim, further comprising at least one sensor.

15. An apparatus as claimed in claim 14, wherein the sensor is a scintillating sensor, resistivity sensor, strain gauge, inclinometer, gradiometer, or magnetometer.

16. An apparatus as claimed in any preceding claim, further comprising a recording apparatus.

17. An apparatus as claimed in any preceding claim, further comprising a processing apparatus.

18. An apparatus as claimed in any preceding claim, further comprising a display apparatus.

19. A method of determining downhole telemetry comprising providing:
an upper sub (20) and a lower sub (12) each having an interior bore (20i, 12i), the upper sub and the lower sub being connected by an electrically insulating joint (20b, 12p) comprising an electrically insulating material interposed between at least a portion of the upper sub and the lower sub;
an electrode (28) disposed along the length of the respective interior bores of the upper sub and the lower sub and extending across the electrically insulating joint, wherein the upper sub and the lower sub each make at least one electrical contact with he electrode;
a generator operably connected to the drill string and forming an electrical circuit across the insulating joint between the upper and the lower sub; and
a receiver operably connected to the drill string;
the method further comprising:
operating the generator to apply a voltage across the electrical circuit to produce an electrical current;
operating the receiver to measure the magnetic field generated by the electrical current; and
analysing the measurements of the magnetic field thus obtained;
**characterised in that** the electrode comprises an insulating pressure housing (26) connected to a tube made of a conductive material.

20. A method as claimed in claim 19, wherein the drill string has a proximate end and a distal end, the distal end comprises a bottom hole assembly, and the generator is disposed at the bottom hole assembly.

21. The method claim 19 or 20, wherein the generator is an AC generator.

22. A method as claimed in claim 19, 20 or 21, wherein the generator comprises a power source.

23. A method as claimed in claim 20, wherein the receiver is disposed at the proximal end of the drill string.

24. A method as claimed in any of claims 19 to 23, wherein the receiver comprises a power source.

25. A method as claimed in any of claims 19 to 24, wherein the electrically insulating joint comprises a pin and box connection between the upper and lower sub.

26. A method as claimed in any of claims 19 to 25, wherein the electrically insulating joint is a threaded joint.

27. A method as claimed in any of claims 19 to 26, wherein the electrically insulating material comprises an electrically insulating polymer.

28. A method as claimed in any of claims 19 to 26, wherein the electrically insulating material is rubber, fibreglass, or ceramic.

29. A method as claimed in any of claims 19 to 28, wherein the drill string further comprises at least one sensor.

30. A method as claimed in claim 29, wherein the sensor is a scintillating sensor, resistivity sensor, strain gauge, inclinometer, gradiometer, or magnetometer.

31. A method as claimed in claim any of claims 19 to 30, wherein the drill string further comprises a recording apparatus.

32. A method as claimed in any of claims 19 to 31, wherein the drill string further comprises a processing apparatus.

33. A method as claimed in any of claims 19 to 32, wherein the drill string further comprises a display apparatus.

34. A method as claimed in any of claims 19 to 33, wherein the voltage applied to the electrical circuit is an AC voltage at about 5Hz.

## Patentansprüche

1. Abwärtsloch-Telemetrie-Vorrichtung, umfassend:
eine obere Subeinheit (20) und eine untere Subeinheit (12), die jeweils eine Bohrung (20i, 12i) aufweisen;
eine elektrisch isolierende Verbindung (20b, 12p), die die obere Subeinheit und die untere Subeinheit verbindet, wobei die elektrisch isolierende Verbindung ein elektrisch isolierendes Material umfasst, welches zwischen wenigstens einen Abschnitt der oberen Subeinheit und der unteren Subeinheit angeordnet ist; und
eine Elektrode (28), die entlang der Länge der jeweiligen inneren Bohrungen der oberen Subeinheit und der unteren Subeinheit angeordnet ist und sich über die elektrisch isolierende Verbindung erstreckt, wobei die obere Subeinheit und die untere Subeinheit jeweils wenigstens einen elektrischen Kontakt mit der Elektrode eingehen;
**dadurch gekennzeichnet, dass** die Elektrode ein isolierendes Druckgehäuse (26) umfasst, welches mit einem Rohr verbunden ist, das aus einem leitenden Material gebildet ist.

2. Vorrichtung nach Anspruch 1, wobei die obere (20) und die untere (12) Subeinheit betriebsmäßig mit einem Bohrgestänge verbunden sind, das ein proximales und ein distales Ende aufweist, wobei das distale Ende eine Bodenloch-Anordnung umfasst.

3. Vorrichtung nach Anspruch 2, ferner umfassend einen Generator, der betriebsmäßig mit dem Bohrgestänge verbunden ist und eine elektrische Schaltung über der isolierenden Verbindung zwischen der oberen (20) und unteren (12) Subeinheit bildet.

4. Vorrichtung nach Anspruch 3, wobei der Generator an der Bodenloch-Anordnung angeordnet ist.

5. Vorrichtung nach Anspruch 3 oder 4, wobei der Generator ein AC Generator ist.

6. Vorrichtung nach Anspruch 3, 4 oder 5, wobei der Generator eine Energiequelle umfasst.

7. Vorrichtung nach irgendeinem der Ansprüche 2 bis 6, ferner umfassend einen Empfänger, der betriebsmäßig mit dem Bohrgestänge verbunden ist.

8. Vorrichtung nach Anspruch 7, wobei der Empfänger betriebsmäßig an dem proximalen Ende des Bohrgestänges verbunden ist.

9. Vorrichtung nach Anspruch 7 oder 8, wobei der Empfänger eine Energiequelle umfasst.

10. Vorrichtung nach irgendeinem vorangehenden Anspruch, wobei die elektrisch isolierende Verbindung eine Stift- (12p) und Box- (20b) Verbindung zwischen der oberen und unteren Subeinheit umfasst.

11. Vorrichtung nach irgendeinem vorangehenden Anspruch, wobei die elektrisch isolierende Verbindung eine Gewindeverbindung ist.

12. Vorrichtung nach irgendeinem vorangehenden Anspruch, wobei das elektrisch isolierende Material einen elektrisch isolierenden Polymer umfasst.

13. Vorrichtung nach irgendeinem der Ansprüche 1 bis 11, wobei das elektrisch isolierende Material Gummi, Glasfaser, oder eine Keramik umfasst.

14. Vorrichtung nach irgendeinem vorangehenden Anspruch, ferner umfassend wenigstens einen Sensor.

15. Vorrichtung nach Anspruch 14, wobei der Sensor ein Szintillationssensor, ein Widerstandssensor, ein Dehnungsmessstreifen, ein Neigungsmessgerät, ein Gradientenmessgerät, oder ein Magnetometer ist.

16. Vorrichtung nach irgendeinem vorangehenden Anspruch, ferner umfassend eine Aufzeichnungsvorrichtung.

17. Vorrichtung nach irgendeinem vorangehenden Anspruch, ferner umfassend eine Verarbeitungsvorrichtung.

18. Vorrichtung nach irgendeinem vorangehenden Anspruch, ferner umfassend eine Anzeigevorrichtung.

19. Verfahren zum Bestimmen einer Abwärtsloch-Telemetrie, umfassend das Bereitstellen:
einer oberen Subeinheit (20) und einer unteren Subeinheit (12), die jeweils eine Bohrung (20i, 12i) aufweisen, wobei die obere Subeinheit und die untere Subeinheit durch eine elektrisch isolierende Verbindung (20b, 12p) verbunden sind, die ein elektrisch isolierendes Material umfasst, welches zwischen wenigstens einen Abschnitt der oberen Subeinheit und der unteren Subeinheit angeordnet ist;
einer Elektrode (28), die entlang der Länge der jeweiligen inneren Bohrungen der oberen Subeinheit und der unteren Subeinheit angeordnet ist und sich über die elektrisch isolierende Verbindung erstreckt, wobei die obere Subeinheit und die untere Subeinheit jeweils wenigstens einen elektrischen Kontakt mit der Elektrode eingehen;
eines Generators, der betriebsmäßig mit dem Bohrgestänge verbunden ist und eine elektrische Schaltung über der isolierenden Verbindung zwischen der oberen und der unteren Subeinheit bildet; und
eines Empfängers, der mit dem Bohrgestänge verbunden ist;
wobei das Verfahren weiter umfasst:
Betreiben des Generators, um eine Spannung über der elektrischen Schaltung anzulegen, um einen elektrischen Strom zu erzeugen;
Betreiben des Empfängers, um das Magnetfeld zu messen, das durch den elektrischen Strom erzeugt wird; und
Analysieren der Messungen des so ermittelten Magnetfelds;
**dadurch gekennzeichnet, dass** die Elektrode ein isolierendes Druckgehäuse (26) umfasst, welches mit einem Rohr verbunden ist, das aus einem leitenden Material gebildet ist.

20. Verfahren nach Anspruch 19, wobei das Bohrgestänge ein proximales und ein distales Ende aufweist, wobei das distale Ende eine Bodenloch-Anordnung umfasst und der Generator in der Bodenloch-Anordnung angeordnet ist.

21. Verfahren nach Anspruch 19 oder 20, wobei der Generator ein AC Generator ist.

22. Verfahren nach Anspruch 19, 20 oder 21, wobei der Generator eine Energiequelle umfasst.

23. Verfahren nach Anspruch 20, wobei der Empfänger an dem proximalen Ende des Bohrgestänges angeordnet ist.

24. Verfahren nach irgendeinem der Ansprüche 19 bis 23, wobei der Empfänger eine Energiequelle umfasst.

25. Verfahren nach irgendeinem der vorangehenden Ansprüche 19 bis 24, wobei die elektrisch isolierende Verbindung eine Stift- (12p) und Box- (20b) Verbindung zwischen der oberen und unteren Subeinheit umfasst.

26. Verfahren nach irgendeinem der Ansprüche 19 bis 25, wobei die elektrisch isolierende Verbindung eine Gewindeverbindung ist.

27. Verfahren nach irgendeinem der Ansprüche 19 bis 26, wobei das elektrisch isolierende Material einen elektrisch isolierenden Polymer umfasst.

28. Verfahren nach irgendeinem der Ansprüche 19 bis 26, wobei das elektrisch isolierende Material Gummi, Glasfaser, oder eine Keramik umfasst.

29. Verfahren nach irgendeinem der Ansprüche 19 bis 28, wobei das Bohrgestänge wenigstens einen Sensor umfasst.

30. Verfahren nach Anspruch 29, wobei der Sensor ein Szintillationssensor, ein Widerstandssensor, ein Dehnungsmessstreifen, ein Neigungsmessgerät, ein Gradientenmessgerät, oder ein Magnetometer ist.

31. Verfahren nach irgendeinem der Ansprüche 19 bis 30, wobei das Bohrgestänge ferner eine Aufzeichnungsvorrichtung umfasst.

32. Vorrichtung nach irgendeinem der Ansprüche 19 bis 31, wobei das Bohrgestänge ferner eine Verarbeitungsvorrichtung umfasst.

33. Verfahren nach irgendeinem der Ansprüche 19 bis 32, wobei das Bohrgestänge ferner eine Anzeigevorrichtung umfasst.

34. Verfahren nach irgendeinem der Ansprüche 19 bis 33, wobei die an die elektrische Schaltung angelegte Spannung eine AC Spannung von ungefähr 5 Hz ist.

## Revendications

1. Appareil de télémétrie de trou vers le bas comprenant:
un raccord supérieur (20) et un raccord inférieur (12) dont chacun comporte un alésage intérieur (20i, 12i);
un joint électriquement isolant (20b, 12p) qui connecte le raccord supérieur au raccord inférieur, le joint électriquement isolant comprenant un matériau électriquement isolant qui est interposé entre au moins une partie du raccord supérieur et le raccord inférieur; et
une électrode (28) qui est disposée suivant la longueur des alésages intérieurs respectifs du raccord supérieur et du raccord inférieur et qui s'étend au travers du joint électriquement isolant, où le raccord supérieur et le raccord inférieur réalisent chacun au moins un contact électrique avec l'électrode,
**caractérisé en ce que** l'électrode comprend un logement de pression isolant (26) qui est connecté à un tube qui est réalisé en un matériau conducteur.

2. Appareil selon la revendication 1, dans lequel le raccord supérieur (20) et le raccord inférieur (12) sont connectés en fonctionnement à un train de tiges de forage comportant une extrémité proximale et une extrémité distale, l'extrémité distale comprenant un assemblage de trou de fond.

3. Appareil selon la revendication 1, comprenant en outre une génératrice connectée en fonctionnement au train de tiges de forage et formant un circuit électrique au travers du joint isolant entre le raccord supérieur (20) et le raccord inférieur (12).

4. Appareil selon la revendication 3, dans lequel la génératrice est disposée au niveau de l'assemblage de trou de fond.

5. Appareil selon la revendication 3 ou 4, dans lequel la génératrice est une génératrice AC.

6. Appareil selon la revendication 3, 4 ou 5, dans lequel la génératrice comprend une source de puissance.

7. Appareil selon l'une quelconque des revendications 2 à 6, comprenant en outre un récepteur connecté en fonctionnement au train de tiges de forage.

8. Appareil selon la revendication 7, dans lequel le récepteur est connecté en fonctionnement au niveau de l'extrémité proximale du train de tiges de forage.

9. Appareil selon la revendication 7 ou 8, dans lequel le récepteur comprend une source de puissance.

10. Appareil selon l'une quelconque des revendications précédentes, dans lequel le joint électriquement isolant comprend une connexion par broche (12p) et boîte (20b) entre le raccord supérieur et le raccord inférieur.

11. Appareil selon l'une quelconque des revendications précédentes, dans lequel le joint électriquement isolant est un joint fileté.

12. Appareil selon l'une quelconque des revendications précédentes, dans lequel le matériau électriquement isolant comprend un polymère électriquement isolant.

13. Appareil selon l'une quelconque des revendications 1 à 11, dans lequel le matériau électriquement isolant est un caoutchouc, une fibre de verre ou une céramique.

14. Appareil selon l'une quelconque des revendications précédentes, comprenant au moins un capteur.

15. Appareil selon la revendication 14, dans lequel le capteur est un capteur de scintillation, un capteur de résistivité, une jauge de contrainte, un inclinomètre, un gradiomètre ou un magnétomètre.

16. Appareil selon l'une quelconque des revendications précédentes, comprenant en outre un appareil d'enregistrement.

17. Appareil selon l'une quelconque des revendications précédentes, comprenant en outre un appareil de traitement.

18. Appareil selon l'une quelconque des revendications précédentes, comprenant en outre un appareil d'affichage.

19. Procédé de détermination de télémétrie de trou vers le bas, comprenant la fourniture de:
un raccord supérieur (20) et un raccord inférieur (12) dont chacun comporte un alésage intérieur (20i, 12i), le raccord supérieur et le raccord inférieur étant connectés au moyen d'un joint électriquement isolant (20b, 12p) comprenant un matériau électriquement isolant qui est interposé entre au moins une partie du raccord supérieur et le raccord inférieur;
une électrode (28) qui est disposée suivant la longueur des alésages intérieurs respectifs du raccord supérieur et du raccord inférieur et qui s'étend au travers du joint électriquement isolant, où le raccord supérieur et le raccord inférieur réalisent chacun au moins un contact électrique avec l'électrode,
une génératrice qui est connectée en fonctionnement au train de tiges de forage et qui forme un circuit électrique au travers du joint isolant entre le raccord supérieur et le raccord inférieur; et
un récepteur qui est connecté en fonctionnement au train de tiges de forage,
le procédé comprenant en outre:
l'actionnement de la génératrice afin d'appliquer une tension aux bornes du circuit électrique pour produire un courant électrique;
l'actionnement du récepteur afin de mesurer le champ magnétique qui est généré par le courant électrique; et
l'analyse des mesures du champ magnétique ainsi obtenu,
**caractérisé en ce que** l'électrode comprend un logement de pression isolant (26) qui est connecté à un tube qui est réalisé en un matériau conducteur.

20. Procédé selon la revendication 19, dans lequel le train de tiges de forage comporte une extrémité proximale et une extrémité distale, l'extrémité distale comprend un assemblage de trou de fond et la génératrice est disposée au niveau de l'assemblage de trou de fond.

21. Procédé selon la revendication 19 ou 20, dans lequel la génératrice est une génératrice AC.

22. Procédé selon la revendication 19, 20 ou 21, dans lequel la génératrice comprend une source de puissance.

23. Procédé selon la revendication 20, dans lequel le récepteur est disposé au niveau de l'extrémité proximale du train de tiges de forage.

24. Procédé selon les revendications 19 à 23, dans lequel le récepteur comprend une source de puissance.

25. Procédé selon l'une quelconque des revendications 19 à 24, dans lequel le joint électriquement isolant comprend une connexion par broche et boîte entre le raccord supérieur et le raccord inférieur.

26. Procédé selon l'une quelconque des revendications 19 à 25, dans lequel le joint électriquement isolant est un joint fileté.

27. Procédé selon l'une quelconque des revendications 19 à 26, dans lequel le matériau électriquement isolant comprend un polymère électriquement isolant.

28. Procédé selon l'une quelconque des revendications 19 à 26, dans lequel le matériau électriquement isolant est un caoutchouc, une fibre de verre ou une céramique.

29. Procédé selon l'une quelconque des revendications 19 à 28, dans lequel le train de tiges de forage comprend en outre au moins un capteur.

30. Procédé selon la revendication 29, dans lequel le capteur est un capteur de scintillation, un capteur de résistivité, une jauge de contrainte, un inclinomètre, un gradiomètre ou un magnétomètre.

31. Procédé selon l'une quelconque des revendications 19 à 30, dans lequel le train de tiges de forage comprend en outre un appareil d'enregistrement.

32. Procédé selon l'une quelconque des revendications 19 à 31, dans lequel le train de tiges de forage comprend en outre un appareil de traitement.

33. Procédé selon l'une quelconque des revendications 19 à 32, dans lequel le train de tiges de forage comprend en outre un appareil d'affichage.

34. Procédé selon l'une quelconque des revendications 19 à 33, dans lequel la tension qui est appliquée sur le circuit électrique est une tension AC d'environ 5 Hz.
